# EUROPEAN PATENT APPLICATION

(11) **EP 1 524 749 A2**
(43) Date of publication of application: **20.04.2005**
(21) Application number: 04023937.8
(22) Date of filing: 07.10.2004
(51) Int. Cl.: H02J 7/14

(54) **Controller for electric power supply of electronic device supplied with electric power from battery of vehicle**

(30) Priority: 14.10.2003 KR 2003071588; 12.05.2004 KR 2004033346; 21.05.2004 KR 2004036509
(71) Applicant: KIM, Sunchae, Yongin-si, Gyunggi-do (KR)
(72) Inventor: The designation of the inventor has not yet been filed
(74) Representative: Kastel, Stefan Dipl.-Phys.

(57) **Abstract**

The present invention relates to a controller for an electric power supply of an electronic device of a vehicle, and more particularly, to a controller for an electric power supply of an electronic device supplied with electric power from a battery of a vehicle. The controller for the electric power supply of the present invention comprises a battery voltage variation detector for detecting voltage variation in the electric power supplied from the battery, and a power control module for allowing the electric power from the battery to be supplied to the electric device when the voltage variation detected by the battery voltage variation detector is equal to or greater than a predetermined level.

## Description

### BACKGROUND OF THE INVENTION

### 1. Field of Invention

The present invention relates to a controller for an electric power supply of an electronic device of a vehicle, and more particularly, to a controller for an electric power supply of an electronic device supplied with electric power from a battery of a vehicle.

### 2. Description of the Prior Art

After vehicles are put on the market, i.e. in a so-called after market, there are methods of supplying electric power to an electronic device for use in the vehicle, including a method of supplying electric power to an electronic device through a power outlet, e.g. a cigar jack, of the vehicle, a method of supplying electric power to an electronic device through direct connection with a battery of the vehicle, and the like.

A power outlet is composed of a voltage (12V or 24V) and a ground. In general, electronic devices used in the vehicles are connected to these power outlets and supplied with electric power from the power outlets. For example, a power cable of a hand-free electronic device is plugged into the power outlet such that the electronic device can be supplied with the electric power. The power on/off of the power outlet is controlled in accordance with a key position of an ignition switch of the vehicle. That is, the power outlet is powered on when the key of the ignition switch is on "ACC" or "ON" position, whereas the power outlet is powered off when the key of the ignition switch is on "OFF" or "START". Therefore, it is not necessary to perform additional power control, i.e. on/off control for the power outlet.

On the other hand, another method of supplying electric power to the electronic device of the vehicle may include a method of using a power supply of an on-board diagnostic connector.

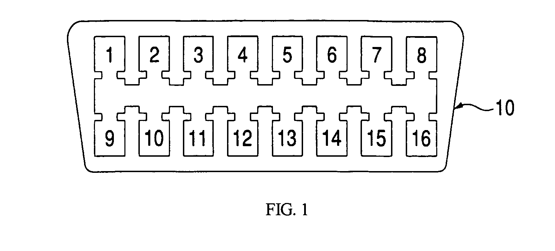

Fig. 1 shows connection ports of the on-board diagnostic connector 10 which is generally supplied with battery power (12V or 24V) of the vehicle through sixteenth port. A mating connector provided on an end of a cable is connected to the on-board diagnostic connector 10, and another connector provided on the other end of the cable is connected to the electronic device installed in the vehicle such as a telematics terminal. In such a state, the battery power of the vehicle is supplied to the electronic device in the vehicle through the sixteenth port.

Since such a power supply of the on-board diagnostic connector directly receives electric power from the battery of the vehicle, the power supply is independent of the key position of the ignition switch. That is, it is kept at a state where electric power can be always supplied. Therefore, if the power supply of the diagnostic connector is employed in the electronic device in the vehicle such as the telematics terminal, additional power control, i.e. on/off control is needed.

To perform the power control in accordance with the ignition switch, any wiring may be added to the ignition switch. However, it results in the modification of the wiring harness, and thus, it is very troublesome and requires additional modification costs.

### SUMMARY OF THE INVENTION

The present invention is conceived to solve the aforementioned problem in the prior art. An object of the present invention is to provide a controller for an electric power supply of an electronic device that uses a power supply of an on-board diagnostic connector directly connected to a battery of a vehicle, wherein on/off control for the electrical power supply can be performed in accordance with key positions of an ignition switch.

According to an aspect of the present invention for achieving the object, there is provided a controller for an electric power supply of an electronic device operable by receiving electric power from a battery of a vehicle, which comprises (1) a battery voltage variation detector for detecting voltage variation in the electric power supplied from the battery, and (2) a power control module for allowing the electric power from the battery to be supplied to the electric device when the voltage variation detected by the battery voltage variation detector is equal to or greater than a predetermined level.

When an ignition switch is changed from an OFF state into an ACC position, sudden voltage variation occurs in the electric power from the vehicle battery during about 100 to 150 milliseconds due to a variety of electrical loads in the vehicle. The power supply controller of the present invention can detect such sudden voltage variation and thus supply the electric power from the battery into the electronic device.

With such a configuration, the electric power is supplied to the electronic device when the ignition switch is turned on, and the supply of electric power into the electronic device is also interrupted when the ignition switch is turned off. Therefore, the on/off control for the electronic device, which is connected to an on-board diagnostic connector in the vehicle and designed to receive normal electric power from the vehicle battery, can be smoothly and simply performed.

According to a preferred embodiment of the present invention, the power supply controller further comprises (1) a power interrupt control module for detecting an OFF state of an ignition switch in the vehicle and controlling interruption of the power supply of the vehicle, and (2) a power interrupt module for interrupting the supply of electric power from the battery into the electronic device when the OFF state of the ignition switch is detected and instructed by the power interrupt control module.

The power interrupt control module detects the ignition switch turning into an OFF position by communicating with a variety of control devices, and the power interrupt module interrupts the supply of electric power from the battery in response to the detected signal such that the electric power supplied from the vehicle battery to the electronic device can be timely interrupted.

According to another aspect of the present invention, there is provided a controller for an electric power supply of an electronic device operable by receiving electric power from a battery of a vehicle, which comprises a battery voltage variation detector for detecting voltage variation in the electric power supplied from the battery, wherein the battery voltage variation detector outputs a signal for canceling power down mode of the electronic device to the electronic device when the voltage variation detected by the battery voltage variation detector is equal to or greater than a predetermined level.

With such a configuration, the control for the supply of electric power (power down mode) can be preformed by connecting an output of the battery voltage variation detector to an input terminal for a power down mode cancel signal of a micro control unit of the electronic device that is designed to automatically enter into the power down mode when the ignition switch is turned off. That is, when the voltage variation in electric power from the battery is above a predetermined level, i.e. when the ignition switch of the vehicle is changed into an ON position, the power down mode cancel signal can be output to the electronic device. Thus, the operation of the electronic device can be controlled by means of the micro control unit in the electronic device.

Meanwhile, according to another preferred embodiment of the present invention, the power supply controller further comprises a regulator for converting an output voltage from the controller into an applicable voltage for use in the electronic device. Preferably, a voltage signal input to the regulator is used as an actuating signal for actuating the regulator, e.g. a HIGH signal (in case of ACTIVE HIGH mode). In such a case, there is an advantage in that heat generation from a circuit element at the side of the power supply controller, i.e. the first transistor TR1, can be reduced.

### BRIEF DESCRIPTION OF THE DRAWINGS

The above and other objects, features and other advantages of the present invention will be more clearly understood from the following detailed description taken in conjunction with the accompanying drawings, in which:

Fig. 1 is a view showing a connecting portion of an on-board diagnostic connector;

Fig. 2 is a block diagram of an on-board diagnostic connector and a controller for an electric power supply according to an embodiment of the present invention;

Fig. 3 is a circuit diagram of the controller for the electric power supply according to the embodiment of the present invention;

Figs. 4a to 4c are graphs illustrating voltage variation in the circuit shown in Fig. 3;

Fig. 5 is a block diagram of a controller for an electric power supply according to another embodiment of the present invention;

Fig. 6 is a block diagram showing a state where a modified controller for an electric power supply is connected to an electric device according to the present invention; and

Fig. 7 is a detailed circuit diagram of a controller for an electric power supply according to a further embodiment of the present invention.

### DETAILED DESCRIPTION OF THE PREFERRED EMBODIMENTS

Hereinafter, preferred embodiments of the present invention will be described in detail with reference to the accompanying drawings.

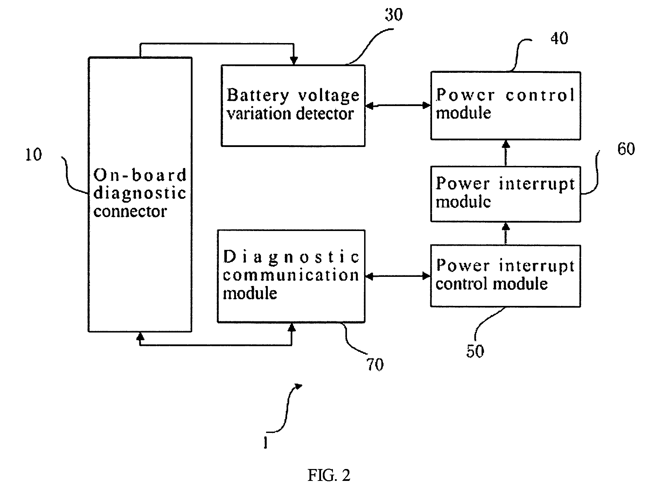

Fig. 2 shows a block diagram of a controller for an electric power supply of an in-vehicle electronic device according to an embodiment of the present invention.

As shown in Fig. 2, the controller 1 for the electric power supply of the in-vehicle electronic device according to the present invention comprises a battery voltage variation detector 30 for detecting voltage variation in the electric power supplied from a battery of a vehicle, and a power control module 40 for supplying the in-vehicle electronic device with the battery power when the voltage variation detected by the battery voltage variation detector 30 is equal to or greater than a predetermined level.

The battery voltage variation detector 30 detects the voltage variation in electric power from the battery of the vehicle voltage through a power terminal of the diagnostic connector 10. As described above, if a user manipulates an ignition switch to turn a key, for example, from an "OFF" position to an "ACC", "ON" or "START" position, sudden voltage variation occurs in the electric power from the battery during about 100 to 150 milliseconds due to a variety of electrical loads in the vehicle.

The power control module 40 causes the battery power of the vehicle to be supplied to the electronic device such that the electronic device, e.g. a telematics terminal, can be operated when it is detected in the battery voltage variation detector 30 that the variation in the battery voltage is equal to or greater than the predetermined level.

The electric power supply controller 1 according to the present invention further comprises a power interrupt control module 50 for communicating with an in-vehicle control devices and detecting an OFF state of the ignition switch to output a signal for interrupting the supply of electric power, and a power interrupt module 60 for receiving the signal for interrupting the supply of electric power output from the power interrupt control module 50 to interrupt the supply of electric power. In general, the power interrupt control module 50 may be included in the electronic device.

The power interrupt control module 50 communicates with the control device connected to the diagnostic connector 10, e.g. an ECU (engine control unit), through a diagnostic communication module 70 in order to detect the OFF state of the ignition switch.

The diagnostic communication module 70 is connected to the diagnostic connector 10 to allow the signal to be received from or transmitted to the connector. The power interrupt control module 50 can sense information on the key positions of the ignition switch because it communicates with the control device in the vehicle. If the key of the ignition switch is put in an OFF state, the power interrupt control module 50 senses the OFF state to output the signal for interrupting the supply of electric power. The power interrupt module 60 cuts off the supply of electric power from the battery voltage variation detector 30 into the power control module 40 to terminate the operation of the electronic device in response to the signal for interrupting the supply of electric power output from the power interrupt control module 50.

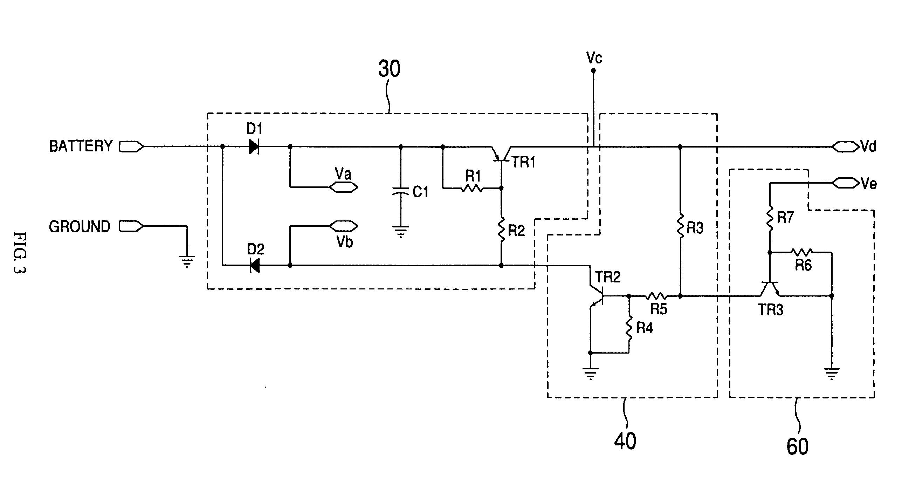

Fig. 3 shows a detailed circuit diagram of the controller for the electric power supply according to the present invention.

The battery voltage variation detector 30 comprises a first diode D 1 of which anode is connected to the battery, a second diode D2 of which cathode is connected to the battery, a condenser C 1 of which one end is connected to a cathode of the first diode and the other end is grounded, a first transistor TR1 of which emitter is connected to the one end of the condenser C 1 and base is connected to an anode of the second diode D2, a first resistor R1 of which one end is connected to the emitter of the first transistor TR1 and the other end is connected to the base of the first transistor TR1, and a second resistor R2 of which one end is connected to the base of the first transistor TR1 and the other end is connected to the anode of the second diode D2.

The power control module 40 comprises a second transistor TR2 including a collector connected to the anode of the second diode D2 and an emitter grounded, a fourth resistor R4 of which one end is connected to a base of the second transistor TR2 and the other end is grounded, a fifth resistor R5 of which one end is connected to the base of the second transistor TR2 and the other end is connected to an output terminal, and a third resistor R3 of which one end is connected to a collector of the first transistor TR1 and the other end is connected to the other end of the fifth resistor R5.

The power interrupt module 60 comprises a third transistor TR3 including a collector connected to the fifth resistor R5 and an emitter grounded, a sixth resistor R6 of which one end is connected to a base of the third transistor TR3 and the other end is grounded, and a seventh resistor R7 of which one end is connected to the base of the third transistor TR3 and the other end is connected to a terminal of the power interrupt control module.

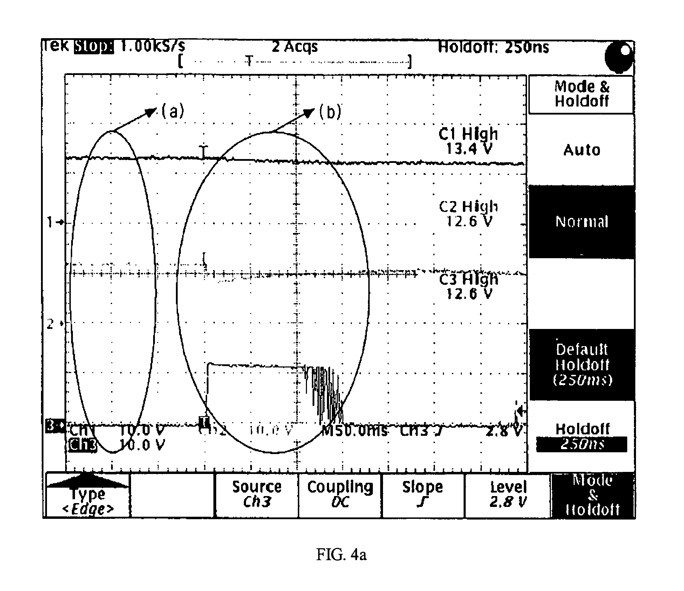

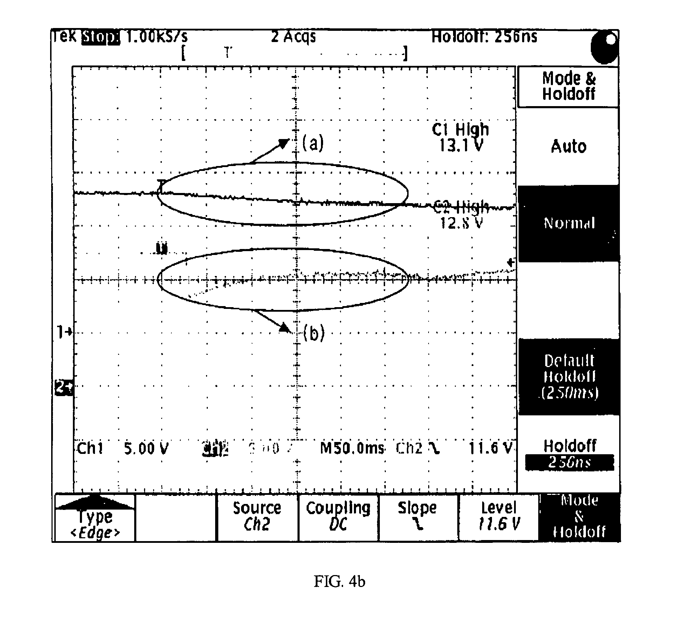

Fig. 4a shows a graph diagram illustrating actually measured data on voltages Va, Vb and Vc of the voltage variation detector 30 shown in Fig. 3. The axis of abscissa denotes time of which unit scale is 50 milliseconds, and the axis of ordinate denotes a voltage of which unit scale is 10 V (in Fig. 4b, however, the unit scale is 5 V). An uppermost state graph represents the voltage Va, a middle state graph represents the voltage Vb, and a lowermost state graph represents the voltage Vc (in such a case, the state graph of Vc illustrates a voltage output when the power control module 40 and the power interrupt module 60 are removed from the circuit of Fig. 3). The levels of arrows marked at the right of numerals are 0 V corresponding to reference values of the voltages, respectively.

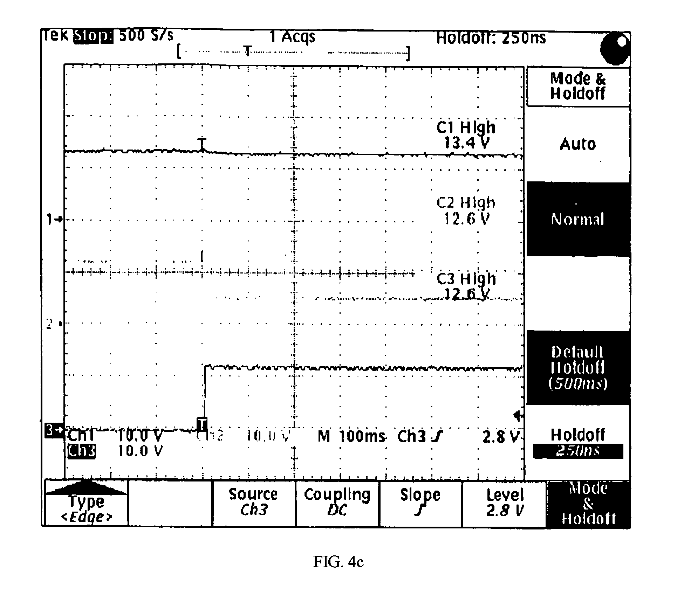

In the respective graphs, a portion designated by (a) represents that the key position of the ignition switch is in an OFF state and a portion designated by (b) represents that the key position of the ignition switch is in an ACC, ON or START state. Further, Fig. 4b shows two state graphs in which an upper one represents the voltage Va and a lower one represents the voltage Vb. Fig. 4c shows three state graphs in which an uppermost one represents the voltage Va, a middle one represents the voltage Vb and a lowermost one represents the voltage Vd.

When the key position of the ignition switch is in an OFF state, there is almost no variation in the battery voltage. The voltages Va and Vb correspond to a case where the battery, i.e. a normal power supply of the vehicle, is connected in a forward direction by means of the first diode D1, and they become approximately 13.4 V as indicated in the portion (a) of Fig. 4a. (These voltages are within a range of 9 to 16 V depending on the charging state of a normal battery mounted into a passenger car.) In addition, since a voltage difference Va-Vb between the emitter and base of the first transistor TR1 is less than about 1 V, the first transistor TR1 is turned off. Therefore, the voltage Vc corresponding to an output signal becomes 0 V as indicated in the portion (a) of Fig. 4a. That is, when the key position of the ignition switch of the vehicle is in an OFF state, no electric power is supplied to the electronic device that is directly supplied with electric power from the battery.

If the key position of the ignition switch is shifted from the OFF state into an ACC, ON or START state, the sudden voltage variation occurs in the electric power from the battery during about 100 to 150 milliseconds due to the variety of electrical loads in the vehicle, whereby variation in the voltages Va, Vb and Vc occurs.

As shown in the portion (a) of Fig. 4b, the voltage Va is gradually changed toward the battery voltage through the resistors R1 and R2 and the second diode D2 due to the voltage charged in the condenser C1 and the polarity of the first diode D1. On the other hand, as shown in the portion (b) of Fig. 4b, the voltage Vb is abruptly changed because it is not connected to the condenser. At this time, the voltage difference Va-Vb between the emitter and base of the first transistor TR1 is kept at a certain voltage level (about 1 V) or more, during which the first transistor TR1 is turned on. As shown in the portion (b) of Fig. 4a, therefore, the voltage Vc corresponding to an output signal (in such a case, the state graph of Vc illustrates a voltage output when the power control module 40 and the power interrupt module 60 are removed from the circuit of Fig. 3) is changed during a certain period of time.

In a case where the power control module 40 and the power interrupt module 60 are included in the circuit of Fig. 3, the voltage Vd corresponding to an output signal at the moment when the first transistor TR1 is turned on causes the second transistor TR2 to be turned on such that the voltage difference Va-Vb between the emitter and base of the first transistor TR1 is continuously kept at a certain voltage level. Therefore, as shown in Fig. 4c, the voltage Vd is continuously kept at a constant voltage, i.e. about 12 V.

Since the constant voltage is output in such a manner, the electronic device that is connected to the on-board diagnostic connector and directly supplied with electric power from the vehicle battery can be turned on.

In the meantime, when it is detected that the key position of the ignition switch is in an OFF state, an operating voltage of the third transistor is applied to the voltage Ve through a terminal of the power interrupt module adjacent to the electronic device. Accordingly, the third transistor TR3 is turned on, and the second transistor TR2 is consequently turned off. Finally, the voltage difference Va-Vb between the emitter and base of the first transistor TR1 becomes a certain voltage level or less, and thus, the voltage Vc corresponding to the output signal becomes 0 V. Therefore, the power control module 40 becomes inactive, and the supply of electric power from the vehicle battery into the electronic device is interrupted.

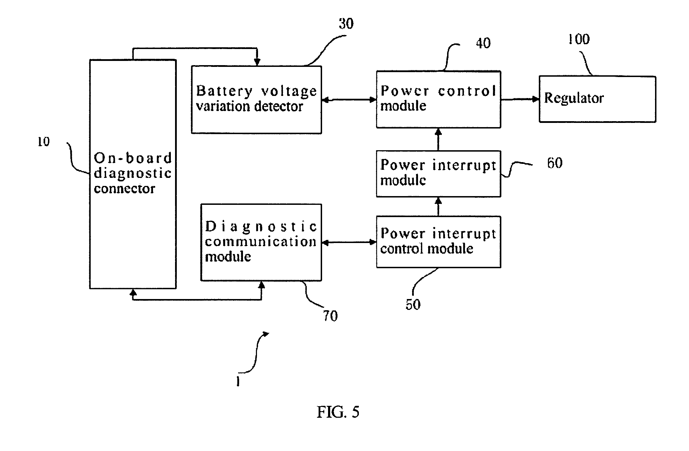

According to another preferred embodiment of the present invention, in order to convert the output voltage Vd into a voltage, e.g. 5 V, which can be used in the electronic device, a voltage regulator 100 is provided at an output terminal of the power control module 40 as shown in Fig. 5.

In addition, according to a further preferred embodiment of the present invention, the output voltage of the power control module 40 may be used as an actuating signal of the voltage regulator 100 (it is in an Active High state; if it is in an Active Low state, it is inverted and used). In this embodiment, heat generation from the transistor at the side of the power supply controller 1, i.e. the first transistor TR1, can be reduced.

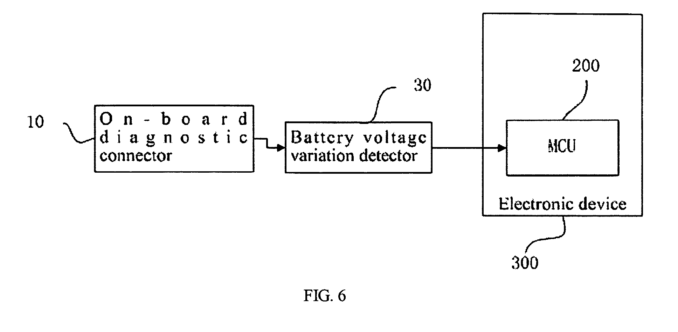

According to another aspect of the present invention, the output voltage Vc of the battery voltage variation detector of the controller 1 for the electric power supply of the present invention can be used as an external signal for canceling power down mode in a micro control unit (MCU) 200 of the electronic device 300 as shown in Fig. 6. In such a case, the aforementioned entire circuit may be used, and more preferably, only a circuit of the battery voltage detector may be used to connect its output with a power down mode cancel signal input terminal of the MCU 200 of the electronic device 300.

Therefore, the supply of electric power into the electronic device that is designed to enter into the power down mode when the key position of the ignition switch is turned off can be controlled in accordance with the on/off position of the ignition switch of the vehicle by means of a simple circuit, and it is not necessary to perform the works such as the complicated wiring harness modification needed in the prior art.

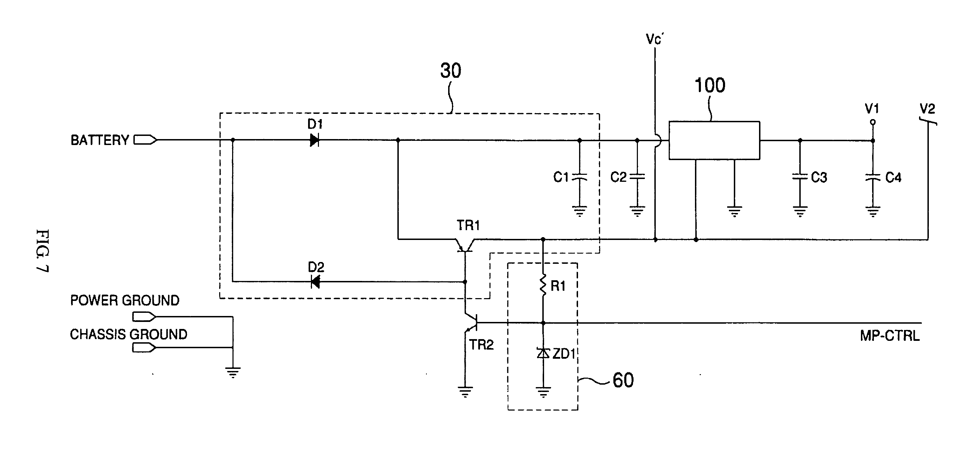

Fig. 7 shows an example of another circuit diagram of the controller for the electric power supply according to the present invention.

In this circuit diagram, the controller for the electric power supply includes a voltage regulator 100 and the power interrupt module is composed of zener diodes and resistors. This circuit can also perform the same function as the aforementioned controller 1 for the electric power supply. If it is configured such that the power down mode in the micro control unit of the electronic device is cancelled as shown in Fig. 6, an output voltage Vc' from only the battery voltage variation detector 30 of the circuit shown in the Fig. 7 is caused to be input to an input terminal for the power down mode cancel signal of the micro control unit. In particular, this circuit diagram is different from the circuit diagram of Fig. 3 in that transistors with resistors installed therein are used as the first to third transistors TR1, TR2 and TR3 in this circuit.

According to the present invention, in the electronic device supplied with electric power from the vehicle battery via the diagnostic connector, the on/off control of the power supply of the vehicle battery can be performed in synchronization with the key operation of the ignition switch in the vehicle without needing to perform additional wiring harness works.

Further, in the electronic device that is designed to enter into the power down mode when the ignition switch is turned off, the external signal for canceling the power down mode can be input in accordance with the on/off operation of the ignition switch in the vehicle such that the supply of electric power from the vehicle battery can be smoothly controlled.

Although the present invention has been described in connection with the embodiments illustrated in the accompanying drawings, the scope of the present invention is defined by the appended claims and it should not be construed as being limited to the accompanying drawings or the aforementioned preferred embodiments.

Furthermore, it should be readily understood that various modifications, changes or adaptations obvious to those skilled in the art and set forth in the claims fall within the scope of the present invention.

## Claims

1. A controller for an electric power supply of an electronic device operable by receiving electric power from a battery of a vehicle, comprising:
a battery voltage variation detector for detecting voltage variation in the electric power supplied from the battery; and
a power control module for allowing the electric power from the battery to be supplied to the electric device when the voltage variation detected by the battery voltage variation detector is equal to or greater than a predetermined level.

2. The controller as claimed in claim 1, further comprising:
a power interrupt control module for detecting an OFF state of an ignition switch in the vehicle; and
a power interrupt module for interrupting supply of the electric power from the battery into the electronic device when the OFF state of the ignition switch is detected by the power interrupt control module.

3. A controller for an electric power supply of an electronic device operable by receiving electric power from a battery of a vehicle, comprising:
a battery voltage variation detector for detecting voltage variation in the electric power supplied from the battery,
wherein the battery voltage variation detector outputs a signal for canceling power down mode of the electronic device to the electronic device when the voltage variation detected by the battery voltage variation detector is equal to or greater than a predetermined level.

4. The controller as claimed in claim 1 or 2, further comprising a regulator for converting an output voltage from the controller into an applicable voltage for use in the electronic device.

5. The controller as claimed in claim 4, wherein a voltage signal input to the regulator is used as an actuating signal for actuating the regulator.
